# EUROPÄISCHE PATENTSCHRIFT

(11) **EP 3 798 458 B1**
(45) Veröffentlichungstag und Bekanntmachung des Hinweises auf die Patenterteilung: **22.03.2023**
(21) Anmeldenummer: 20196126.5
(22) Anmeldetag: 15.09.2020
(51) Int. Cl.: F16C 41/04, F16C 43/06, F16C 19/36

(54) **MONTAGEWERKZEUG UND VERFAHREN ZUM MONTIEREN EINES LAGERS MIT DIESEM MONTAGEWERKZEUG**
ASSEMBLY TOOL AND METHOD OF ASSEMBLING A BEARING WITH THIS ASSEMBLY TOOL
OUTIL DE MONTAGE ET MÉTHODE D'ASSEMBLAGE D'UN ROULEMENT AVEC CET OUTIL DE MONTAGE

(30) Priorität: 30.09.2019 DE 102019214952
(43) Veröffentlichungstag der Anmeldung: 31.03.2021
(73) Patentinhaber: Aktiebolaget SKF, 415 50 Göteborg (SE)
(72) Erfinder: Reugels, Michael, 97478 Knetzgau (DE); Fritz, Dominik, 97070 Würzburg (DE); Tanke, Jesko-Henning, 97422 Schweinfurt (DE); Zika, Thomas, 3350 Haag (AT)
(74) Vertreter: Kuhstrebe, Jochen

(56) Entgegenhaltungen:
- WO-A1-2015/108132
- DE-A1-102014 205 190
- JP-A- 2009 185 925
- US-A1- 2010 215 297

## Beschreibung

Vorliegende Erfindung betrifft ein Montagewerkzeug zum Montieren eines Lagerrings mit Wälzkörpern gemäß dem Oberbegriff von Patentanspruch 1. Die vorliegende Erfindung betrifft des Weiteren ein Verfahren zum Montieren eines Lagers mit einem Innenring und einem Außenring gemäß dem Oberbegriff von Patentanspruch 9.

Für Kegelrollenlageranordnungen in Turbinen, beispielsweise zur Lagerung einer Hauptwelle einer Windturbine, werden derzeit Kegelrollenlager mit einteiligen Käfigen verwendet. In Turbinenanwendungen, bei denen die Kegelrollenlager in einer O-Anordnung eingesetzt werden und einen Durchmesser von mehreren Metern haben, ist es aufgrund der Größe der Turbinen nicht möglich, diese zur Montage des zweiten Kegelrollensatzes der O-Anordnung umzudrehen. Daher wird das Kegelrollenlager, welches in der Endanordnung oben ist, bislang mit einem Käfig ausgestattet, so dass zunächst der Außenring montiert werden kann und anschließend der Innenring mit den Wälzkörpern, die durch den Käfig gehalten werden, mit dem schmalen Durchmesser nach unten eingesetzt werden kann. Bei dieser Kopfübermontage ist jedoch die Verwendung von einteiligen Lagerkäfigen essenziell, da die Wälzkörper ohne einen solchen Lagerkäfig oder mit Lagerkäfigen, die aus einzelnen Käfigtaschensegmenten bestehen, während der Montage herausfallen würden. Die einteiligen Käfige hingegen stellen eine Selbst-Haltefunktion der Kegelrollen während der Montage sicher und ermöglichen so, dass ein Innenring mit einem Kegelrollensatz in einer Kopfüberposition montiert werden kann. Diese massiven Käfige sind jedoch sehr teuer in der Herstellung und benötigen häufig zusätzliche Elemente an dem Lagerinnenring, wie beispielsweise eine spezifische Oberflächentopografie der Führungsflächen, was zusätzliche Kosten verursacht. Des Weiteren kann die Führung eines Käfigs an dem Innenring oder den Kegelrollen einem Gleitkontakt unterworfen sein, der den Verschleiß des Lagers erhöhen kann.

DE 10 2014 205190 A1 offenbart ein Montagewerkzeug nach dem Oberbegriff des Anspruchs 1.

Es ist deshalb eine Aufgabe der vorliegenden Erfindung, eine Möglichkeit bereitzustellen, Lager für eine solche Turbinenanwendung mit Käfigsegmenten zu verwenden oder die Lager als vollrollige Lager zu realisieren.

Diese Aufgabe wird durch ein Montagewerkzeug zum Montieren eines Lagerrings mit Wälzkörpern gemäß Patentanspruch 1, ein Verfahren zum Montieren eines Lagers mit einem Innenring und einem Außenring gemäß Patentanspruch 9.

Das Montagewerkzeug zum Montieren eines Lagerrings mit Wälzkörpern weist einen Ring auf, der dazu ausgebildet ist, an einer Seitenfläche des Lagerrings angeordnet zu werden. Bei dem Lagerring kann es sich um einen Lagerinnenring oder um einen Lageraußenring handeln. Der Ring des Montagewerkzeugs kann einstückig oder segmentiert ausgebildet sein.

Das Montagewerkzeug weist des Weiteren Schieberelemente auf, wobei die Schieberelemente umfänglich gleichmäßig um den Ring verteilt sind. Der Ring weist Aufnahmen für die Schieberelemente auf. Die Schieberelemente können dabei in einer axialen Richtung bezüglich des Rings und/oder einer radialen Richtung relativ zum Ring verschoben werden. Die Anzahl der Schieberelemente kann gleich der Anzahl der Wälzkörper sein. Alternativ können auch weniger Schieberelemente als Wälzkörper vorgesehen sein. In beiden Fällen können alle oder nur ein Teil der Schieberelemente, beispielsweise jedes zweite, in die Endposition verschoben werden.

Die Aufnahmen können auf beliebige Weise hergestellt werden, beispielsweise als Durchgangsöffnungen wie Bohrungen, gefräste Löcher oder durch andere Herstellungsarten. Die Schieberelemente können von einer Anfangsposition, in der das Montagewerkzeug bewegt werden kann und die Schieberelemente nicht relativ zu dem Ring verschoben sind, in eine Endposition verschoben werden, wobei die Schieberelemente in der Endposition vollständig relativ zu dem Ring verschoben sind, beispielsweise vollständig durch Durchgangsöffnungen durchgeschoben sind.

Üblicherweise wird ein Lager mit montiertem Außen- und Innenring und dazwischen angeordneten Wälzkörpern geliefert. Um das Lager zu montieren, wird das Montagewerkzeug auf den Lagerring (insbesondere den großen Durchmesser eines Innenrings) aufgesetzt und die Schieberelemente in ihre Endposition verschoben. Der Lagerring kann nun mit dem Montagewerkzeug und den Wälzkörpern aus dem Lager herausgehoben werden und die beiden Ringe können getrennt voneinander montiert werden.

Alternativ kann das Montagewerkzeug auf den Lagerring (insbesondere den großen Durchmesser eines Innenrings) aufgesetzt werden und der Lagerring einzeln mit Wälzkörpern oder einer Kombination aus Wälzkörpern und Käfigsegmenten bestückt und die Schieberelemente nach und nach in ihre Endposition verschoben werden.

In beiden Fällen wird durch das Montagewerkzeug aus dem Lagerring mit den Wälzkörpern eine Anordnung gebildet, die als ein Ganzes bewegt, insbesondere auf eine Nabeneinheit aufgesetzt, werden kann, ohne dass die Wälzkörper von dem Lagerring herunterfallen. Hierzu sind die Schieberelemente dazu ausgebildet, in der Endposition jeweils zwischen zwei Wälzkörpern angeordnet zu sein. Durch diese Anordnung der Schieberelemente kann eine radiale Beweglichkeit der Wälzkörper bezüglich des Lagerrings begrenzt werden. Die Schieberelemente übernehmen dabei die Funktion eines Lagerkäfigs, so dass die Wälzkörper zwischen den Schieberelementen und dem Lagerring gesichert sind. Die Verwendung eines einteiligen Lagerkäfigs kann somit entfallen. Stattdessen kann das Lager vollrollig ausgebildet sein, oder es können einzelne Käfigsegmente verwendet werden. Solche Käfigsegmente können jeweils einen oder auch mehrere Wälzkörper aufnehmen. Des Weiteren können anstelle von Käfigsegmenten Abstandshalter zwischen den Wälzkörpern vorgesehen werden.

Auf diese Weise kann ein kompaktes Modul aus dem Lagerring mit den Wälzkörpern sowie dem Montagewerkzeug gebildet werden. Dieses Modul kann dann als Ganzes beispielsweise in einen Außenring eingesetzt werden. Das Modul aus Lagerring, Wälzkörper und Montagewerkzeug kann in eine Lageranordnung eingesetzt oder auch wieder aus dieser entfernt werden.

Handelt es sich bei dem Lagerring um den Lagerinnenring, sind gemäß einer Ausführungsform die Schieberelemente in ihrer Endposition in dem freien Raum radial außerhalb des Teilkreisdurchmessers zwischen zwei Wälzkörpern und der Laufbahn des Außenrings angeordnet. Alternativ kann es sich bei dem Lagerring um den Außenring handeln, wobei die Schieberelemente dann in ihrer Endposition in dem freien Raum radial innerhalb des Teilkreisdurchmessers zwischen zwei Wälzkörpern und der Laufbahn des Innenrings angeordnet sind. Durch diese Anordnung kann sichergestellt werden, dass die Wälzkörper sich nicht von dem Innenring bzw. dem Außenring entfernen können.

Gemäß der beanspruchten Erfindung sind die Schieberelemente winklig bezüglich der Ringfläche verschiebbar. Die Schieberelemente bilden dabei in ihrer Endposition eine Kegelstumpfform, wobei sich diese Kegelstumpfform an der Kegelstumpfform, die von den Rollenachsen gebildet wird, orientiert. Der Durchmesser des Kreises, der durch die Schieberelemente in ihrer Anfangsposition gebildet wird, ist somit größer als der Durchmesser des Kreises, der durch die Schieberelemente in ihrer Endposition gebildet wird, oder umgekehrt.

Gemäß einer weiteren Ausführungsform weist das Montagewerkzeug ein Zentrierelement auf, um den Ring an dem Außendurchmesser eines Führungsflanschs des Lagerrings zu zentrieren. Durch das Zentrierelement kann so eine exakte radiale Position des Montagewerkzeugs in Bezug auf den Lagerring sichergestellt werden.

Gemäß einer weiteren Ausführungsform sind die Aufnahmen als Durchgangsöffnungen, insbesondere als Langlöcher ausgebildet. Durch die Ausbildung als Langlöcher ist es möglich, dass die Schieberelemente in Umfangsrichtung verschiebbar sind. Auf diese Weise kann eine definierte Anpassung in Umfangsrichtung der Schieberelemente ermöglicht werden, um unterschiedliche Abstände zwischen den Wälzkörpern zu kompensieren. Diese unterschiedliche Beabstandung kann beispielsweise durch eine Akkumulation von einem anfänglichen Wälzkörperspiel in Umfangsrichtung verursacht werden. Durch ein solches Langloch kann zusätzlich eine unterschiedliche Wärmeausdehnung der Schieberelemente und der Wälzkörper erreicht werden, insbesondere wenn sie aus unterschiedlichen Materialien hergestellt sind. Statt ein Langloch zu verwenden, können die Durchgangsöffnungen auch exakt der Größe der Schieberelemente entsprechen.

Gemäß der beanspruchten Erfindung bestehen die Schieberelemente jeweils aus zwei Stiften. Die zwei Stifte können an einem oder an beiden Enden durch ein jeweiliges Verbindungselement, zum Beispiel in der Form einer Platte, miteinander verbunden sein. Dieses Verbindungselement kann größer als die Durchgangsöffnungen in dem Ring sein, wodurch erreicht werden kann, dass die Schieberelemente nicht aus der Durchgangsöffnungen herausgezogen werden können und/oder durch die Durchgangsöffnungen vollständig durchgeschoben werden können.

Gemäß einer weiteren Ausführungsform weist das Montagewerkzeug ein Befestigungselement auf, um den Ring an dem Lagerring zu befestigen. Ein solches Befestigungsmittel kann beispielsweise als eine Klemm- oder Schraubvorrichtung ausgestaltet sein. Durch ein solches Befestigungsmittel kann eine Sicherung des Montagewerkzeugs an dem Lagerring sichergestellt werden. Des Weiteren kann der Ring rotierend auf dem Lagerring befestigt werden. Hierzu können beispielsweise Rollen vorgesehen sein, die eine Rotation des Rings bezüglich des Lagerrings ermöglichen.

Gemäß einer weiteren Ausführungsform weist das Montagewerkzeug ein Abstandsmittel zum Einstellen eines axialen Abstands zwischen dem Ring und dem Lagerring und/oder ein Abstandsmittel zum Einstellen eines radialen Abstands zwischen den Schieberelementen und den Laufbahnen der Wälzkörper auf. Die Abstandsmittel können beispielsweise als einstellbare Abstandsmittel ausgebildet sein, so dass der axiale Abstand zwischen dem Ring und dem Lagerring und/oder der radiale Abstand zwischen den Schieberelementen und der Laufbahn der Wälzkörper variabel eingestellt werden. Auf diese Weise kann das Montagewerkzeug für verschiedene Größen an Wälzkörpern verwendet werden.

Gemäß einer weiteren Ausführungsform weist das Montagewerkzeug ein Halteelement auf, um die Schieberelemente in ihrer Anfangsposition und/oder Endposition und/oder in einer oder mehreren Zwischenpositionen zu halten. Ein solches Haltemittel kann als Verriegelungselement ausgebildet sein. Beispielsweise kann das Halteelement ein Stift oder Hebel sein, der über eine Halteplatte der Schieberelemente bewegt werden kann, um die Schieberelemente in ihrer oberen oder unteren, d. h. Anfangs- bzw. Endposition, zu halten. Alternativ kann es sich bei dem Haltemittel um eine Klemmvorrichtung, Schraubvorrichtung oder ähnliches handeln. Das Haltemittel kann beispielsweise als federvorgespannter Bolzen ausgebildet sein. Durch ein solches Haltemittel kann sichergestellt werden, dass die Schieberelemente nicht ungewünscht von ihrer Anfangs- in ihre Endposition verschoben werden oder umgekehrt.

Gemäß einer weiteren Ausführungsform ist der Ring aus einem Metall hergestellt und/oder die Schieberelemente aus einem Kunststoff oder einem Metall hergestellt. Werden die Schieberelemente aus einem Kunststoff hergestellt, können diese leicht elastisch sein, wodurch eine weitere Anpassung an die Wälzkörper bzw. an ein radiales Spiel oder umfängliches Spiel der Wälzkörper möglich ist.

Gemäß einem weiteren Aspekt wird ein Verfahren zum Montieren eines Lagers mit einem Innenring und einem Außenring vorgeschlagen. Das Verfahren weist die Schritte auf: Anordnen des Innenrings, Anordnen der Wälzkörper an dem Innenring, Anordnen des oben beschriebenen Montagewerkzeugs an dem Innenring, Verschieben der Schieberelemente des Montagewerkzeugs in ihre jeweilige Endposition, so dass die Schieberelemente jeweils zwischen zwei Wälzkörpern angeordnet sind, um eine radiale Beweglichkeit der Wälzkörper bezüglich des Lagerrings zu begrenzen (d.h. ein Herausfallen der Wälzkörper zu verhindern), Einsetzen des Innenrings mit dem Montagewerkzeug und den Wälzkörpern auf eine Hülse oder Welle und/oder in den Außenring, und Entfernen des Montagewerkzeugs. Bei der Hülse oder Welle kann es sich insbesondere um ein Element einer Nabeneinheit einer Turbine handeln.

Um den Innenring wieder von der Hülse oder Welle abzunehmen, kann das Montagewerkzeug erneut an dem Innenring angebracht werden und die Schieberelemente durchgeschoben werden, um die Wälzkörper an dem Innenring zu halten. Dann kann der Innenring samt den Wälzkörpern und dem Montagewerkzeug entfernt werden.

Durch die Verwendung des Montagewerkzeugs ist es möglich, auf einen einteiligen Käfig zu verzichten, da die Schieberelemente die Funktion eines Lagerkäfigs übernehmen, so dass die Wälzkörper zwischen den Schieberelementen und dem Lagerring gesichert sind. Das Lager kann vollrollig ausgebildet sein, oder es können einzelne Käfigsegmente verwendet werden. Durch ein solches Montageverfahren ist es daher möglich, einen Lagerring mit den Wälzkörpern ohne einteiligen Käfig als Ganzes zu bewegen. Dies ist insbesondere für Anwendungen mit Großwälzlagern, wie beispielsweise für Turbinen, erforderlich, wie oben beschrieben ist

Gemäß einem weiteren Aspekt, der nicht Bestandteil der beanspruchten Erfindung ist, wird ein Lager mit einem Innenring und einem Außenring, zwischen denen Wälzkörper angeordnet sind, vorgeschlagen. Das Lager kann insbesondere durch das oben beschriebene Montageverfahren montiert werden.

Gemäß einem weiteren Aspekt, der nicht Bestandteil der beanspruchten Erfindung ist, wird eine Nabeneinheit für eine Turbine mit zwei Kegelrollenlagern, die in einer O-Anordnung angeordnet sind, vorgeschlagen, wobei die Kegelrollenlager jeweils einen Innenring und einen Außenring aufweisen, zwischen denen jeweils Kegelrollen angeordnet sind. Zumindest eines der Kegelrollenlager kann durch das oben beschriebene Montageverfahren montiert werden, wodurch kein einteiliger Käfig erforderlich ist. Stattdessen kann das Lager vollrollig ausgebildet sein oder mit Käfigsegmenten verwendet werden, wie oben detaillierter beschrieben ist.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine perspektivische Ansicht eines Montagewerkzeugs;
- Fig. 2:: eine perspektivische Detailansicht eines Schieberelements des Montagewerkzeugs von Fig. 1;
- Fig. 3:: eine weitere perspektivische Ansicht des Montagewerkzeugs;
- Fig. 4:: eine perspektivische Ansicht einer Anordnung des Montagewerkzeug und eines Lagerrings;
- Fig. 5:: eine Schnittansicht einer Nabeneinheit einer Turbine mit aufgesetztem Montagewerkzeug;
- Fig. 6:: eine perspektivische Ansicht eines Ausschnitts der Nabeneinheit von Fig. 5;
- Fig. 7:: eine Schnittansicht der Nabeneinheit von Fig. 5 mit montiertem Lagerrinnenring;
- Fig. 8:: eine perspektivische Ansicht eines Ausschnitts der Nabeneinheit von Fig. 7; und
- Fig. 9:: eine perspektivische Ansicht des Ausschnitts der Nabeneinheit von Fig. 8 mit herausgezogenen Schieberelementen.

Im Folgenden werden gleiche oder funktionell gleichwirkende Elemente mit denselben Bezugszeichen gekennzeichnet.

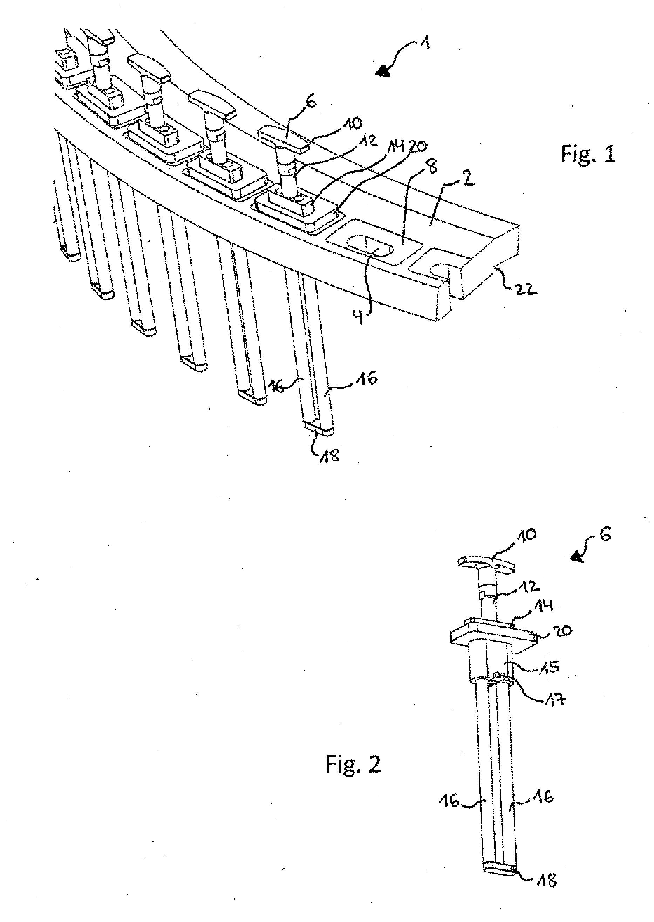

Fig. 1 zeigt eine perspektivische Ansicht eines Montagewerkzeugs 1. Das Montagewerkzeug 1 weist einen Ring 2 auf. In dem Ring 2 sind Aufnahmen bzw. Durchgangsöffnungen 4 vorgesehen, durch die Schieberelemente 6 durchgeschoben werden können. Die Durchgangsöffnungen 4 sind bevorzugt als längliche Öffnungen ausgestaltet. In diesen länglichen Öffnungen 4 können die Schieberelemente 6 in umfänglicher Richtung beweglich sein, um ein umfängliches Spiel zwischen den Wälzkörpern auszugleichen. Die Durchgangsöffnungen 4 weisen Auflageflächen 8 auf, auf die die Schieberelemente 6 aufgesetzt werden.

Die Schieberelemente 6, die in Fig. 2 im Detail dargestellt sind, bestehen aus einem Haltegriff 10, der mit einem ersten röhrenförmigen Abschnitt 12 der Schieberelemente 6 verbunden ist. Der erste Abschnitt 12 ist über einen Zwischenabschnitt 14 mit zwei Stiften 16 verbunden. Die Stifte 16 sind unterhalb des Rings 2 angeordnet und können sich entlang der Durchgangsöffnungen 4 verschieben. Die Schieberelemente 6 weisen an ihrem unteren Ende eine Verbindungsplatte 18 auf. Die Verbindungsplatte 18 dient dazu, die zwei Stifte 16 an ihrem unteren Ende miteinander zu verbinden. An dem anderen, oberen Ende sind die beiden Stifte 16 durch den Zwischenabschnitt 14 miteinander verbunden.

Der Zwischenabschnitt 14 dient dazu, eine Endposition der Schieberelemente 6 zu definieren. Der Zwischenabschnitt 14 ist dabei so ausgebildet, dass er eine Auflageplatte 20 aufweist. Diese Auflageplatte 20 liegt auf der Auflagefläche 8 des Rings 2 auf, wenn die Schieberelemente 6 in ihre Endposition geschoben werden.

Unterhalb der Auflageplatte 20 laufen die Stifte 16 des Schieberelements 6 durch ein weiteres Element 15. Dieses Element 15 kann entlang der Stifte 16 verschoben werden und dient dazu, eine Anfangsposition der Schieberelemente 6 zu definieren. In der Anfangsposition stößt eine Auskragung 17 des Elements 15 an dem Ring 2 an und die Schieberelemente 6 können nicht weiter aus den Durchgangsöffnungen 4 herausgezogen werden. Durch das Element 15 bzw. dessen Auskragung 17 kann festgelegt werden, wie weit die Schieberelemente 6 aus dem Ring 2 herausgezogen werden können.

Um das Montagewerkzeug 1 an einem Lagerring anzubringen, weist der Ring 2 ein Zentriermittel 22 auf. Das Zentriermittel 22, das als Kante ausgebildet ist, dient dazu, das Montagewerkzeug 1 auf dem Lagerring anzuordnen, wobei das Zentriermittel 22 an einer Außenseite des Lagerrings, beispielsweise einem Führungsflansch, anliegt.

Obwohl in den Figuren das Montagewerkzeug derart ausgebildet ist, dass es an einem Innenring eines Lagers anordenbar ist, kann das Montagewerkzeug 1 auch so ausgebildet werden, dass es mit einem Außenring eines Lagers verbunden werden kann.

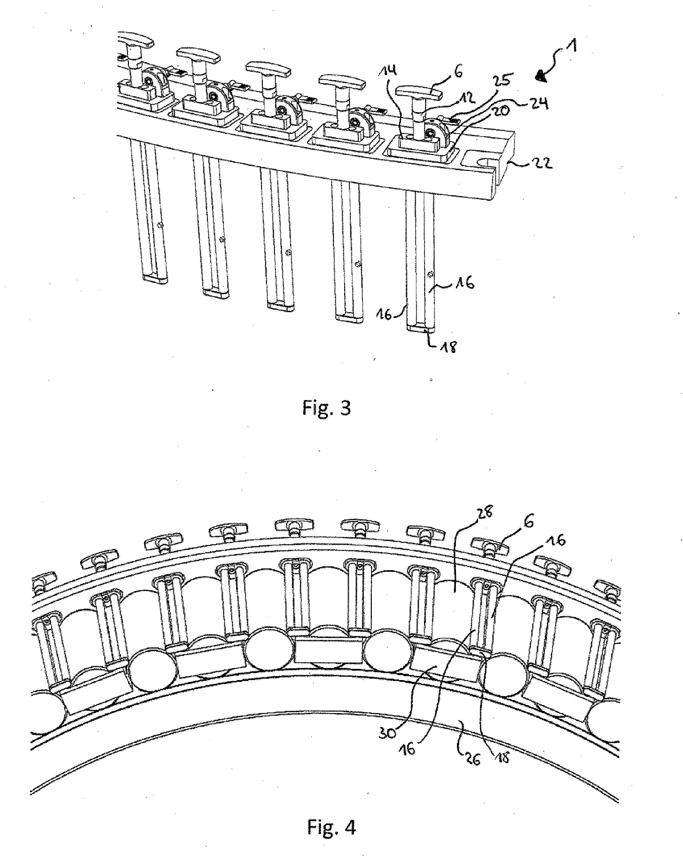

Fig. 3 zeigt eine weitere perspektivische Ansicht eines Montagewerkzeugs 1. Wie hier gezeigt ist, weist das Montagewerkzeug 1 Haltemittel 24 auf. Diese Haltemittel 24 dienen dazu, die Schieberelemente in ihrer Anfangs- und/oder Endposition zu arretieren. Die Haltemittel 24 können beispielsweise jeweils einen Riegel 25 aufweisen, der in die Schieberelemente 6 eingreift, um diese in ihrer Endposition zu halten. Hierzu kann der Riegel 25 in der Endposition über den Zwischenabschnitt 14 bewegt werden, um dessen Position zu sichern. Die Haltemittel 24 können beispielsweise als federvorgespannte Bolzen, die in Querbohrungen in den Schieberelementen 6 eingreifen, oder als Kugeln, die in Rillen in den Schieberelementen 6 eingreifen, ausgebildet sein.

Fig. 4 zeigt eine perspektivische Ansicht eines Montagewerkzeugs 1, das an einem Lagerring 26 angeordnet ist. Der Lagerring 26 ist in diesem Fall ein Innenring eines Lagers. Der Innenring 26 ist mit Wälzkörpern 28 bestückt. Das Montagewerkzeug 1 ist in dem hier gezeigten Ausführungsbeispiel bereits vollständig an dem Lagerring 26 angeordnet, wobei die Schieberelemente 6 sich in ihrer Endposition befinden. Wie hier gesehen werden kann, sind die Schieberelemente 6 in ihrer Endposition jeweils zwischen zwei Wälzkörpern 28 des Lagerrings 26 angeordnet. Die Wälzkörper 28 sind in diesem Fall durch Käfigsegmente 30 beabstandet. Die Käfigsegmente 30 sind dabei so ausgestaltet, dass jeweils ein käfigartiges Segment 30 um jeden zweiten Wälzkörper 28 angeordnet ist, wobei eine Bodenplatte 30 zwei Wandungen bzw. Stege des Käfigsegments 30 verbindet. Die Schieberelemente 6 sind in ihrer Endposition über einem Teilkreisdurchmesser der Wälzkörper 28 angeordnet. Auf diese Weise sind die Schieberelemente 6 dazu ausgebildet, die Wälzkörper 28 in ihrer Endposition an dem Lagerring 26 zu halten. Durch die Verwendung des Montagewerkzeugs 1 ist es möglich, auf einen einteiligen Käfig zu verzichten und stattdessen, wie hier gezeigt, Käfigsegmente zu verwenden. Alternativ kann das Lager auch vollrollig ausgebildet sein. Da das Montagewerkzeug 1 die Funktion eines Käfigs übernimmt und die Wälzkörper 28 an dem Lagerring 26 sichert, ist es möglich, den Lagerring 26 mit den Wälzkörpern 28 zu bewegen, ohne dass die Wälzkörper 28 herausfallen.

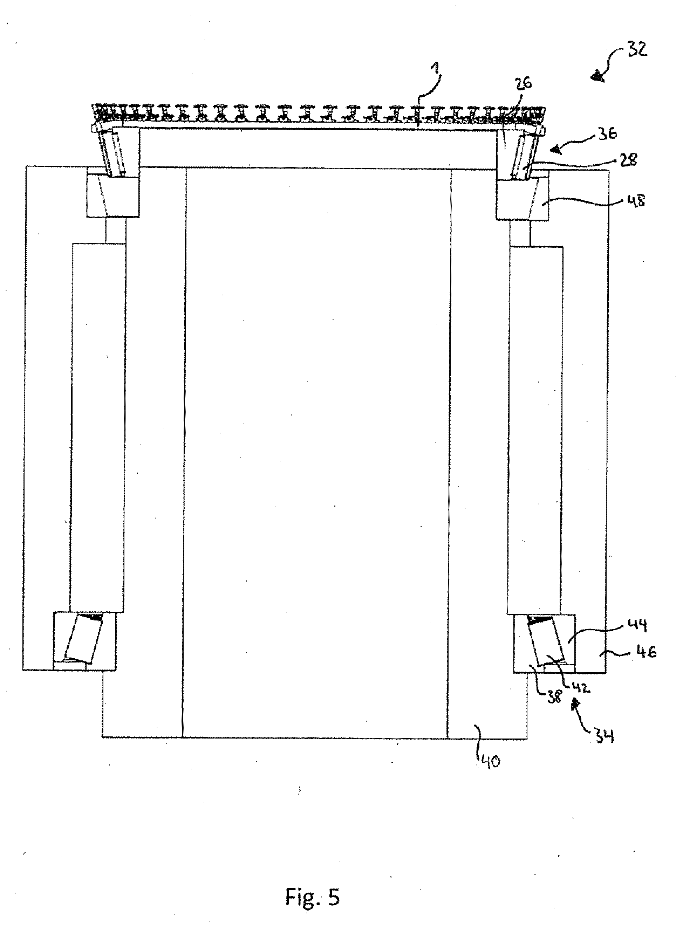

Mit Bezugnahme auf die Figuren 5 bis 9 wird nun ein Montageverfahren eines Lagerrings 26 unter Verwendung des Montagewerkzeugs 1 beschrieben.

Bei der hier gezeigten Montage des Lagerrings 26 handelt es sich um die Montage eines Innenrings 26 auf einer Hülse oder Welle 32 einer Nabeneinheit 32 einer Turbine. Die Nabeneinheit 32 weist zwei Kegelrollenlager 34, 36 auf, die in einer O-Anordnung angeordnet sind. Die Kegelrollenlager 34, 36 werden dabei nur von einer Seite auf der Nabeneinheit 32 montiert, nämlich von der Seite des Kegelrollenlagers 36 aus.

Das Kegelrollenlager 34 weist einen Innenring 38 auf, der auf die Hülse oder Welle 40 aufgeschoben ist. Bei der Montage des Kegelrollenlagers 34 können die Wälzkörper 42 einfach auf dem Innenring 38 angeordnet werden, da durch die O-Anordnung die Wälzkörper 42 nicht herunterfallen können. Anschließend wird ein Außenring 44 an dem Wälzlager 34 angebracht. Ein Gehäuse 46 kann anschließend angebracht werden, um das Lager zu schützen.

Um nun das Lager 36 zu montieren, ist es erforderlich, entweder die Nabeneinheit 32 umzudrehen, was aufgrund der Größe der Nabeneinheit 32 von mehreren Metern Durchmesser schwierig durchzuführen ist. Alternativ muss das Lager 36 ebenfalls von oben, wie das Lager 34, montiert werden. Da jedoch dabei die Wälzkörper 28 nicht an dem Lagerinnenring 26 angebracht werden können, um diesen in den Außenring 48 einzusetzen, da die Wälzkörper in diesem Fall aufgrund der Gravitationskraft herausfallen würden, war es bislang erforderlich, einen einteiligen Käfig zu verwenden, um die Wälzkörper 28 an dem Lagerring 26 zu halten. Dies kann jedoch durch das Montagewerkzeug 1 vermieden werden.

Wie in Figuren 5 bis 8 gezeigt ist, wird das Montagewerkzeug 1 auf den Lagerring 26 aufgesetzt und die Schieberelemente 6 werden in ihre Endposition verschoben. Durch diese Positionierung des Montagewerkzeugs 1 werden die Wälzkörper 28 an dem Lagerring 26 gehalten, wie mit Bezugnahme auf die Figuren 1 bis 3 beschrieben ist. Dieses Modul bestehend aus dem Montagewerkzeug 1, dem Lagerinnenring 26 und den Wälzkörpern 28 kann nun einfach auf die Hülse 40 aufgeschoben werden. Hierbei kann der Lageraußenring 48 bereits angeordnet sein, wie in Fig. 5 dargestellt ist.

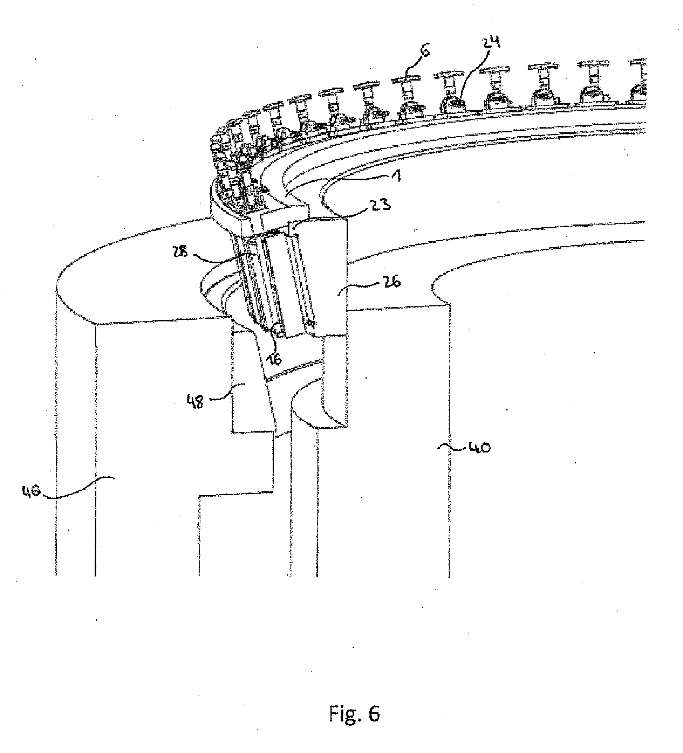

Wie in Fig. 6 gezeigt ist, kann der Lagerinnenring 26 als kompaktes Modul mit den Wälzkörpern 28 und dem Montagewerkzeug 1 auf die Hülse 40 aufgeschoben werden. Wie hier gezeigt ist, liegt das Zentriermittel 22 des Montagewerkzeugs 1 an einem Führungsflansch 23 des Innenrings 26 an.

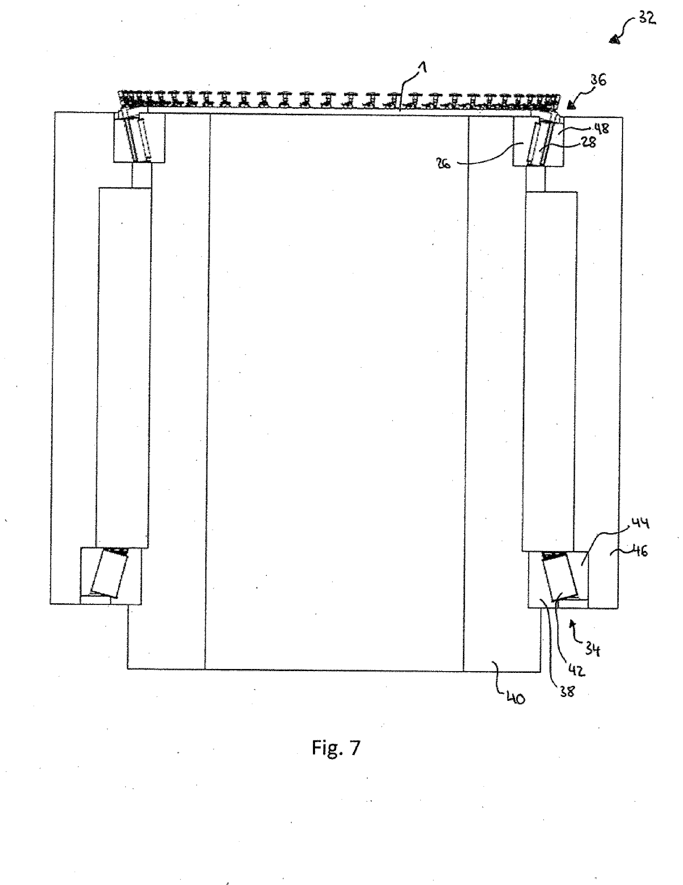

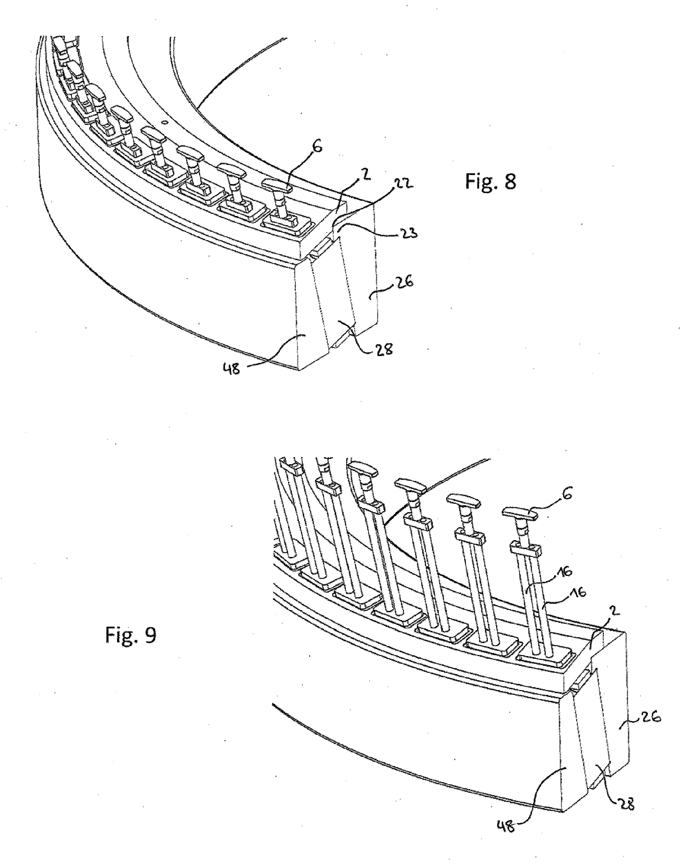

Fig. 7 zeigt die Endpositionierung des Moduls bestehend aus Montagewerkzeug 1, Lagerinnenring 26 und Wälzkörpern 28. Fig. 8 zeigt eine perspektivische Ansicht der Endpositionierung des Montagewerkzeugs 1, des Lagerinnenrings 26, der Wälzkörper 28 und des Außenrings 48.

Sobald die Lagerringe 26, 48 und die Wälzkörper 28 korrekt positioniert sind, kann das Montagewerkzeug 1 wieder entfernt werden. Dies ist in Fig. 9 dargestellt, in der gezeigt ist, wie die Schieberelemente 6 aus der zusammengesetzten Lageranordnung herausgezogen werden. Nach dem Herausziehen der Schieberelemente 6 kann das Montagewerkzeug 1 auf einfache Weise wieder entfernt werden.

Durch das hier gezeigte Montagewerkzeug ist eine einfache Montage eines Lagerrings mit Wälzkörpern ohne Verwendung eines Käfigs oder zumindest ohne Verwendung eines einteiligen Käfigs möglich.

### Bezugszeichenliste

- 1: Montagewerkzeug
- 2: Ring
- 4: Aufnahme/Durchgangsöffnung
- 6: Schieberelement
- 8: Auflagefläche
- 10: Haltegriff
- 12: erster Abschnitt
- 14: Zwischenabschnitt
- 15: Element
- 16: Stifte
- 17: Auskragung
- 18: Verbindungsplatte
- 20: Auflageplatte
- 22: Zentriermittel
- 23: Führungsflansch
- 24: Haltemittel
- 25: Riegel
- 26: Lagerinnenring
- 28: Wälzkörper
- 30: Bodenplatte
- 32: Nabeneinheit
- 34: Kegelrollenlager
- 36: Kegelrollenlager
- 38: Innenring
- 40: Hülse/Welle
- 42: Wälzkörper
- 44: Außenring
- 46: Gehäuse
- 48: Außenring

## Patentansprüche

1. Montagewerkzeug (1) für einen Lagerring (26) mit Wälzkörpern (28),
wobei das Montagewerkzeug (1) einen Ring (2), der dazu ausgebildet ist, an einer Seitenfläche des Lagerrings (26) angeordnet zu werden, und Schieberelemente (6) aufweist, wobei der Ring (2) Aufnahmen (4) für die Schieberelemente (6) aufweist und wobei die Schieberelemente (6) umfänglich gleichmäßig um den Ring (2) verteilt sind und dazu ausgebildet sind, von einer Anfangsposition in eine Endposition relativ zu dem Ring (2) verschoben zu werden, wobei die Schieberelemente (6) des Weiteren dazu ausgebildet sind, in der Endposition jeweils zwischen zwei Wälzkörpern (28) angeordnet zu sein, um eine radiale Beweglichkeit der Wälzkörper (28) bezüglich des Lagerrings (26) zu begrenzen, wobei die Schieberelemente (6) winklig bezüglich der Ringfläche verschiebbar sind, so dass die Schieberelemente (6) in ihrer Endposition eine Kegelstumpfform bilden, **dadurch gekennzeichnet, dass** die Schieberelemente (6) jeweils aus zwei Stiften bestehen, die an zumindest einem Ende miteinander verbunden sind.

2. Montagewerkzeug nach Anspruch 1, wobei der Lagerring (26) ein Innenring ist und die Schieberelemente (6) in ihrer Endposition in dem freien Raum radial außerhalb des Teilkreisdurchmessers zwischen zwei Wälzkörpern (28) und der Laufbahn eines Außenrings (48) angeordnet sind oder wobei der Lagerring (48) ein Außenring ist und die Schieberelemente (6) in ihrer Endposition in dem freien Raum radial innerhalb des Teilkreisdurchmessers zwischen zwei Wälzkörpern (28) und der Laufbahn eines Innenrings (48) angeordnet sind.

3. Montagewerkzeug nach einem der vorhergehenden Ansprüche, wobei das Montagewerkzeug (1) ein Zentrierelement (22) aufweist, um den Ring (2) an dem Außendurchmesser eines Führungsflanschs (23) des Lagerrings (26) zu zentrieren.

4. Montagewerkzeug nach einem der vorhergehenden Ansprüche, wobei die Aufnahmen als Durchgangsöffnungen (4), insbesondere als Langlöcher, ausgebildet sind.

5. Montagewerkzeug nach einem der vorhergehenden Ansprüche, wobei das Montagewerkzeug (1) ein Befestigungsmittel aufweist, um den Ring (2) an dem Lagerring (26) zu befestigen.

6. Montagewerkzeug nach einem der vorhergehenden Ansprüche, wobei das Montagewerkzeug (1) ein Abstandsmittel zum Einstellen eines axialen Abstands zwischen dem Ring (2) und dem Lagerring (26) und/oder ein Abstandsmittel zum Einstellen eines radialen Abstands zwischen den Schieberelementen (6) und den Laufbahnen der Wälzkörper (28) aufweist.

7. Montagewerkzeug nach einem der vorhergehenden Ansprüche, wobei das Montagewerkzeug (1) ein Halteelement aufweist, um die Schieberelemente (6) in ihrer Anfangsposition und/oder Endposition und/oder ein oder mehreren Zwischenpositionen zu halten.

8. Montagewerkzeug nach einem der vorhergehenden Ansprüche, wobei der Ring (2) aus einem Metall hergestellt ist und/oder wobei die Schieberelemente (6) aus einem Kunststoff und/oder einem Metall hergestellt sind.

9. Verfahren zum Montieren eines Lagers (36) mit einem Innenring (26) und einem Außenring (48), zwischen den Wälzkörper (28) angeordnet sind, **dadurch gekennzeichnet, dass** das Verfahren die Schritte aufweist:
Anordnen des Innenrings (26),
Anordnen der Wälzkörper (28) an dem Innenring (26),
Anordnen des Montagewerkzeugs (1) nach einem der vorhergehenden Ansprüche an dem Innenring (26),
Verschieben der Schieberelemente (6) des Montagewerkzeugs (1) in ihre jeweilige Endposition, so dass die Schieberelemente (6), die jeweils aus zwei Stiften bestehen, die an zumindest einem Ende miteinander verbunden sind, jeweils zwischen zwei Wälzkörpern (28) angeordnet sind, um eine radiale Beweglichkeit der Wälzkörper (28) bezüglich des Lagerrings (26) zu begrenzen, wobei die Schieberelemente (6) winklig bezüglich der Ringfläche verschoben werden, so dass die Schieberelemente (6) in ihrer Endposition eine Kegelstumpfform bilden,
Einsetzen des Innenrings (26) mit dem Montagewerkzeug (1) und den Wälzkörpern (28) auf eine Hülse oder Welle (40) und/oder in den Außenring (48) und Entfernen des Montagewerkzeugs (1).

## Claims

1. Assembly tool (1) for a bearing ring (26) having rolling members (28), wherein the assembly tool (1) has a ring (2) which is configured to be disposed on a lateral face of the bearing ring (26), and sliding elements (6), wherein the ring (2) has receptacles (4) for the sliding elements (6), and wherein the sliding elements (6) are distributed uniformly about the circumference of the ring (2) and are configured to be displaced relative to the ring (2) from an initial position to a terminal position, wherein the sliding elements (6) in the terminal position are in each case furthermore configured to be disposed between two rolling members (28) so as to delimit a radial mobility of the rolling members (28) in relation to the bearing ring (26), wherein the sliding elements (6) are displaceable at an angle in relation to the ring face such that the sliding elements (6) in the terminal position thereof form the shape of a truncated cone, **characterized in that** the sliding elements (6) are in each case composed of two pins that are connected to each other at least at one end.

2. Assembly tool according to Claim 1, wherein the bearing ring (26) is an inner ring, and the sliding elements (6) in the terminal position thereof are disposed in the void radially outside the pitch circle diameter between two rolling members (28) and the raceway of an outer ring (48), or wherein the bearing ring (48) is an outer ring, and the sliding elements (6) in the terminal position thereof are disposed in the void radially within the pitch circle diameter between two rolling members (28) and the raceway of an inner ring (48).

3. Assembly tool according to one of the preceding claims, wherein the assembly tool (1) has a centring element (22) for centring the ring (2) on the external diameter of a guide flange (23) of the bearing ring (26).

4. Assembly tool according to one of the preceding claims, wherein the receptacles are configured as through openings (4), in particular as slotted holes.

5. Assembly tool according to one of the preceding claims, wherein the assembly tool (1) has a fastening means for fastening the ring (2) to the bearing ring (26).

6. Assembly tool according to one of the preceding claims, wherein the assembly tool (1) has a spacing means for adjusting an axial spacing between the ring (2) and the bearing ring (26), and/or a spacing means for adjusting a radial spacing between the sliding elements (6) and the raceways of the rolling members (28).

7. Assembly tool according to one of the preceding claims, wherein the assembly tool (1) has a holding element for holding the sliding elements (6) in the initial position and/or terminal position and/or one or a plurality of intermediate positions thereof.

8. Assembly tool according to one of the preceding claims, wherein the ring (2) is produced from a metal, and/or wherein the sliding elements (6) are produced from a plastics material and/or a metal.

9. Method for assembling a bearing (36) having an inner ring (26) and an outer ring (48), rolling members (28) being disposed therebetween, **characterized in that** the method comprises the following steps:
disposing the inner ring (26);
disposing the rolling members (28) on the inner ring (26) ;
disposing the assembly tool (1) according to one of the preceding claims on the inner ring (26);
displacing the sliding elements (6) of the assembly tool (1) to the respective terminal position of the former such that the sliding elements (6), which are in each case composed of two pins that are connected to each other at least at one end, are in each case disposed between two rolling members (28) so as to delimit a radial mobility of the rolling members (28) in relation to the bearing ring (26), wherein the sliding elements (6) are displaced at an angle in relation the ring face such that the sliding elements (6) in the terminal position thereof form the shape of a truncated cone;
placing the inner ring (2) with the assembly tool (1) and the rolling members (28) onto a sleeve or shaft (40) and/or into the outer ring (48), and removing the assembly tool (1).

## Revendications

1. Outil de montage (1) pour une bague de roulement (26) avec des corps de roulement (28),
l'outil de montage (1) présentant une bague (2) qui est configurée pour être agencée sur une surface latérale de la bague de roulement (26) et des éléments coulissants (6), la bague (2) présentant des logements (4) pour les éléments coulissants (6) et les éléments coulissants (6) étant répartis de manière uniforme sur la circonférence de la bague (2) et étant configurés pour être déplacés d'une position initiale à une position finale par rapport à la bague (2), les éléments coulissants (6) étant en outre configurés pour être agencés, dans la position finale, chacun entre deux corps de roulement (28) afin de limiter une mobilité radiale des corps de roulement (28) par rapport à la bague de roulement (26), les éléments coulissants (6) étant déplaçables angulairement par rapport à la surface de la bague, de telle sorte que les éléments coulissants (6) forment une forme tronconique dans leur position finale, **caractérisé en ce que** les éléments coulissants (6) sont constitués chacun de deux tiges qui sont reliées entre elles à au moins une extrémité.

2. Outil de montage selon la revendication 1, dans lequel la bague de roulement (26) est une bague intérieure et les éléments coulissants (6) sont agencés, dans leur position finale, dans l'espace libre radialement à l'extérieur du diamètre du cercle partiel entre deux corps de roulement (28) et le chemin de roulement d'une bague extérieure (48) ou dans lequel la bague de roulement (48) est une bague extérieure et les éléments coulissants (6) sont agencés, dans leur position finale, dans l'espace libre radialement à l'intérieur du diamètre du cercle partiel entre deux corps de roulement (28) et le chemin de roulement d'une bague intérieure (48) .

3. Outil de montage selon l'une quelconque des revendications précédentes, dans lequel l'outil de montage (1) présente un élément de centrage (22) afin de centrer la bague (2) sur le diamètre extérieur d'une bride de guidage (23) de la bague de roulement (26).

4. Outil de montage selon l'une quelconque des revendications précédentes, dans lequel les logements sont configurés sous forme d'ouvertures de passage (4), notamment sous forme de trous oblongs.

5. Outil de montage selon l'une quelconque des revendications précédentes, dans lequel l'outil de montage (1) présente un moyen de fixation afin de fixer la bague (2) à la bague de roulement (26).

6. Outil de montage selon l'une quelconque des revendications précédentes, dans lequel l'outil de montage (1) présente un moyen d'écartement pour ajuster une distance axiale entre la bague (2) et la bague de roulement (26) et/ou un moyen d'écartement pour ajuster une distance radiale entre les éléments coulissants (6) et les chemins de roulement des corps de roulement (28).

7. Outil de montage selon l'une quelconque des revendications précédentes, dans lequel l'outil de montage (1) présente un élément de maintien afin de maintenir les éléments coulissants (6) dans leur position initiale et/ou leur position finale et/ou dans une ou plusieurs positions intermédiaires.

8. Outil de montage selon l'une quelconque des revendications précédentes, dans lequel la bague (2) est fabriquée en un métal et/ou dans lequel les éléments coulissants (6) sont fabriqués en une matière plastique et/ou en un métal.

9. Procédé de montage d'un palier (36) avec une bague intérieure (26) et une bague extérieure (48) entre lesquelles sont agencés des corps de roulement (28), **caractérisé en ce que** le procédé présente les étapes suivantes :
l'agencement de la bague intérieure (26),
l'agencement des corps de roulement (28) sur la bague intérieure (26),
l'agencement de l'outil de montage (1) selon l'une quelconque des revendications précédentes sur la bague intérieure (26),
le déplacement des éléments coulissants (6) de l'outil de montage (1) dans leur position finale respective, de telle sorte que les éléments coulissants (6), constitués chacun de deux tiges reliées entre elles à au moins une extrémité, sont agencés chacun entre deux corps de roulement (28), afin de limiter une mobilité radiale des corps de roulement (28) par rapport à la bague de roulement (26), les éléments coulissants (6) étant déplacés angulairement par rapport à la surface de la bague, de telle sorte que les éléments coulissants (6) forment une forme tronconique dans leur position finale, l'insertion de la bague intérieure (26) avec l'outil de montage (1) et les corps de roulement (28) sur une douille ou un arbre (40) et/ou dans la bague extérieure (48), et le retrait de l'outil de montage (1).
